# EUROPÄISCHE PATENTSCHRIFT

(11) **EP 3 649 863 B1**
(45) Veröffentlichungstag und Bekanntmachung des Hinweises auf die Patenterteilung: **24.08.2022**
(21) Anmeldenummer: 18205172.2
(22) Anmeldetag: 08.11.2018
(51) Int. Cl.: A21C 1/14, B01F 35/75

(54) **HEBEKIPPER MIT AUSTRAGSVORRICHTUNG FÜR KOMPAKTE NAHRUNGSMITTELMASSEN, INSBESONDERE RIEGELMASSEN ODER KEKSTEIGE**
LIFTING TIPPER WITH DISCHARGE DEVICE FOR COMPACT MASSES OF FOODSTUFFS, IN PARTICULAR BAR MASSES OR BISCUIT DOUGHS
BENNE ÉLÉVATRICE AVEC DISPOSITIF DE SORTIE POUR MASSES D'ALIMENTS COMPACTS, EN PARTICULIER DE MASSES POUR BARRES OU PÂTES À BISCUITS

(43) Veröffentlichungstag der Anmeldung: 13.05.2020
(73) Patentinhaber: DIOSNA Dierks & Söhne GmbH, 49086 Osnabrück (DE)
(72) Erfinder: BÖERT, Konrad, 49324 Melle (DE)
(74) Vertreter: Lenzing Gerber Stute

(56) Entgegenhaltungen:
- EP-A1- 2 499 944
- DE-A1- 2 421 104
- DE-U1-202010 007 274
- FR-A- 1 180 297
- GB-A- 2 015 889
- US-A- 1 695 221
- US-A1- 2005 018 534
- US-A1- 2010 271 900

## Beschreibung

Die vorliegende Erfindung betrifft einen Hebekipper mit einer Austragsvorrichtung zum Austrag einer kompakten Nahrungsmittelmasse aus einem Knetbottich mit den Merkmalen des Oberbegriffs des Anspruchs 1 sowie ein Verfahren zum Austragen einer kompakten Nahrungsmittelmasse aus einem in einem Hebekipper angeordneten Knetbottich.

Produkte wie Kekse, Lebkuchen, und Riegel, insbesondere Proteinriegel, Schoko-, Müsli, Frucht- und Cerealienriegel und dergleichen weisen eine hochviskose Nahrungsmittelmasse auf, die bei der Verarbeitung besondere Anforderungen mit sich bringt.

Misch- und Knetmaschinen für solche hochviskosen Nahrungsmittelmassen bestehen vorwiegend aus einem fahrbaren Bottich unterschiedlicher Größe für Massen von 120 bis 1000 Kg, in den jeweils ein motorisch antreibbares Misch- und Knetwerkzeug zur Durchführung des Misch- und Knetvorganges hineinragt. Nach Beendigung des Knetvorganges wird das Werkzeug ausgefahren und der Bottich zu einer Verarbeitungsanlage gefahren. Mit Hilfe eines Hebekippers wird der Bottich von einer Hebebühne des Hebekippers erfasst, auf die der Größe des Hebekippers entsprechenden Höhe gebracht und um mehr als 90° gekippt, so dass das die im Bottich befindliche Masse in die darunter angeordnete Eingangsstation einer Bearbeitungsvorrichtung fällt, welche beispielsweise als ein Trichter ausgebildet sein kann. Ein solcher Hebekipper geht beispielsweise aus der DE 19 40 501 U1 und der DE 42 09 689 C2 hervor. Die Offenlegungsschrift US 2010/0271900 A1 offenbart ebenfalls einen Hebekipper mit einem Mischwerkzeug entsprechend dem Oberbegriff des Anspruchs 1.

Hochviskose Nahrungsmittelmassen sind nicht fließfähig. Beim Knetvorgang bildet sich ein großer Nahrungsmittelmassen-Block aus. Dieser wird herkömmlicherweise bei dem Austrag aus dem Hebekipper durch Bedienpersonal manuell zerkleinert, um einzelne kleinere Teigstücke für die Weiterbearbeitung in der Bearbeitungsvorrichtung bereitzustellen. Denn es besteht die Gefahr, dass die Öffnung des Trichters teilweise oder ganz durch die Masse verstopft wird. Die Bearbeitungsvorrichtung umfasst beispielsweise das Walzen der Masse zum lagenweisen Auftragen auf ein Fließband, wie das bei mehrlagigen Produkten, insbesondere Riegeln oder Keksen gewünscht ist. Es ist Aufgabe der vorliegenden Erfindung einen kompakten Hebekipper mit einer Austragsvorrichtung zum Austrag einer zähen Nahrungsmittelmasse aus einem Knetbottich bereitzustellen, welcher in vollautomatischem Betrieb eine sichere und hygienische Nahrungsmittelmassenführung gewährleistet.

Diese Aufgabe wird von einem Hebekipper mit einer Austragsvorrichtung zum Austrag einer kompakten Nahrungsmittelmasse aus einem Knetbottich mit den Merkmalen des Anspruchs 1 und von einem Verfahren zum Austragen einer kompakten Nahrungsmittelmasse aus einem in einem Hebekipper angeordneten Knetbottich mit den Merkmalen des Anspruchs 11 gelöst. Vorteilhafte Ausgestaltungen und Weiterbildungen der Erfindung ergeben sich aus den abhängigen Ansprüchen.

Unter kompakter Nahrungsmittelmasse werden extrem feste Teige oder Riegel-, Stangen- oder Tafelmassen verstanden, die hochviskose, blockbildend und nicht fließfähig sind. Riegelmassen aus Trockenfrüchten, insbesondere auf Dattelbasis, mit Proteinen angereichte Sport-Riegelmassen und Hartkeks- und Lebkuchenteige haben beispielsweise solche Eigenschaften.

Es ist ein Hebekipper mit einer Austragsvorrichtung zum Austrag einer kompakten Nahrungsmittelmasse aus einem in dem Hebekipper angeordneten Knetbottich, vorgesehen, der wenigstens zwei Schneidwerkzeuge aufweist, die jeweils wenigstens zwei Schneidkanten aufweisen. Vorzugsweise sind die Schneidwerkzeuge dazu eingerichtet, eine kompakte Nahrungsmittelmasse zu durchtrennen, zu zerschneiden oder abzuschälen. Die kompakte Nahrungsmittelmasse kann durch die Schneidwerkzeuge so bearbeitet werden, dass sie in kleinen Portionen aus dem Bottich fällt und eine manuelle Bearbeitung der Masse nicht mehr notwendig ist.

Es ist vorteilhaft, wenn die wenigstens zwei Schneidwerkzeuge jeweils wenigstens einen Messerkopf haben, wobei der Messerkopf die Schneidkanten aufweist.

Vorzugsweise weisen die Schneidwerkzeuge jeweils eine Stange auf, an deren Ende der wenigstens eine Messerkopf angeordnet ist. In einer Ausführungsform kann vorgesehen sein, dass die Stange eine Welle ist, die, insbesondere mittels eines Elektromotors antreibbar ist. Es kann auch vorgesehen sein, dass der Bottich drehbar ist.

Vorteilhafterweise weist die Austragsvorrichtung drei Schneidwerkzeuge auf, die etwa in einem gleichen Abstand zueinander angeordnet sind.

Es ist vorteilhaft, wenn die Messerköpfe der Schneidwerkzeuge in einer gemeinsamen Ebene liegen.

In einer Ausführungsform weisen die Messerköpfe jeweils eine Grundplatte auf, auf der die Stange orthogonal steht und von der flügelartig wenigstens zwei Messer hervorragen, deren Seiten zumindest teilweise als Schneidkante ausgebildet sind. Bevorzugt sind vier Messer pro Messerkopf vorgesehen.

Ganz allgemein kann die Austragsvorrichtung eine zusätzliche Rückhaltevorrichtung aufweisen, die verhindert, dass zu große Teigstücke bzw. Massen aus dem Bottich fallen. Eine solche Rückhaltevorrichtung hätte den Vorteil, dass die Größe der ausgetragenen Massen zuverlässig definiert werden könnte. Diese Rückhaltevorrichtung kann beispielsweise eine Platte oder ein Gitter sein, die die Öffnung des Bottichs abdecken. Die Platte oder das Gitter weisen dabei definierte Öffnungen auf, die nur für eine bestimmte Teiggröße durchlässig sind, so dass zu große Stücke nicht aus dem Bottich fallen können.

Der Hebekipper kann eine oder zwei Säulen aufweisen.

Vorzugsweise ist bei einem Zweisäulen-Hebekipper im oberen Teil ein Querbalken vorgesehen, an dem wenigstens eine Haltevorrichtung der Austragsvorrichtung angeordnet ist, die die wenigstens zwei Schneidwerkzeuge trägt. Dabei ist es vorteilhaft, wenn die wenigstens eine Haltevorrichtung senkrecht von dem Querbalken abgeht und die wenigstens eine Haltevorrichtung ein Drehgelenk aufweist, so dass ein Ende der wenigstens einen Haltevorrichtung mittels eines Elektromotors verschwenkbar ist, wobei die wenigstens zwei Schneidwerkzeuge an dem zu verschwenkenden Teil der wenigstens einen Haltevorrichtung angeordnet sind.

Die Austragsvorrichtung mit Haltevorrichtung kann auch an einer Hebebühne des Hebekippers befestigt sein.

Vorzugsweise ist die Haltevorrichtung dazu eingerichtet, die Schneidwerkzeuge in einen auf einer Hebebühne des Hebekippers drehbar befestigten Knetbottich einzuschwenken. Es ist aber auch denkbar, dass die Einführung linear erfolgt.

Die Stäbe der wenigstens zwei Schneidwerkzeuge gehen bevorzugt senkrecht von der zugeordneten Haltevorrichtung ab. Es ist aber auch ein Winkel zwischen beispielsweise 80 und 110 Grad denkbar.

Der Hebekipper kann zusätzlich eine Ausschälvorrichtung aufweisen.

Weiterhin ist ein Verfahren zum Austragen einer kompakten Nahrungsmittelmasse aus einem in einem Hebekipper angeordneten Knetbottich mit folgenden Verfahrensschritten vorgesehen:
- Verkippen des Knetbottichs um eine Kippachse,
- Einfahren wenigstens zweier Schneidwerkzeuge einer an dem Hebekipper angeordneten Austragsvorrichtung in den Knetbottich,
- Bewegen der Schneidwerkzeuge relativ zu einer im Knetbottich befindlichen Nahrungsmittelmasse, derart, dass die Schneidwerkzeuge die Nahrungsmittelmasse in kleinere Stücke schneiden,
- Vergrößerung des Kippwinkels des Knetbottichs, derart, dass die kleinen Stücke aus dem Knetbottich fallen und die noch vorhandenen großen Stücke zurückgehalten werden,
- Nach Beendigung des Austragsvorgangs Herausfahren der Schneidwerkzeuge aus dem Knetbottich.

Bevorzugt wird dabei zuerst der Bottich gekippt und darauffolgend die Austragsvorrichtung in den Bottich bewegt. Eine andere Reihenfolge ist aber auch möglich. Bei dem Ein- und Herausfahren der Schneidwerkzeuge handelt es sich bevorzugt um einen Schwenkvorgang, bei dem die Schneidwerkzeuge, insbesondere vollautomatisch, ein- und ausgeschwenkt werden.

Dieses Verfahren erlaubt auf einfache und effiziente Weise, die Größe einer aus einem Bottich ausgetragenen zähen Masse an die nachgeschalteten Bearbeitungsvorrichtungen anzupassen.

Die Relativbewegung kann durch Drehung der Schneidwerkzeuge und/oder Drehung des Bottichs hergestellt werden. Es kann aber auch vorgesehen sein, dass die Schneidwerkzeuge starr ausgebildet sind und sich die Knetmasse mit dem drehenden Bottich um die Schneidwerkzeuge herum bewegt.

Vorzugsweise sind die Schneidwerkzeuge bzw. die Messerköpfe der Schneidwerkzeuge so ausgestaltet, dass sie während des Kippvorgangs die großen Stücke zurückhalten.

Es ist vorteilhaft, wenn die Kippbewegung und die Relativbewegung, sowie die Ausgestaltung und die Anzahl der Schneidwerkzeuge an die Zusammensetzung der Nahrungsmittelmasse angepasst sind.

Vorzugsweise ist das Einschwenken der Schneidwerkzeuge in den Knetbottich lastgesteuert.

Um die Zuverlässigkeit der Austragsvorrichtung zu erhöhen, kann auch eine Videoüberwachung vorgesehen sein, bei der anhand von Bildanalyse die Größen der Teigmassen beobachtet werden und falls notwendig Einfluss auf die Regelung der Austragsvorrichtung genommen wird, um das Austragen von zu großen Stücke aus dem Bottich zu vermeiden.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine schematische Darstellung eines Hebekippers mit Austragsvorrichtung in unterschiedlichen Positionen,
- Figur 2:: eine Seitenansicht der Austragsvorrichtung aus Figur 1 mit Schneidwerkzeugen, sowie
- Figur 3:: eine Draufsicht auf die Austragsvorrichtung aus Figur 2 mit vereinfacht dargestelltem Hebekipper und Bottich.

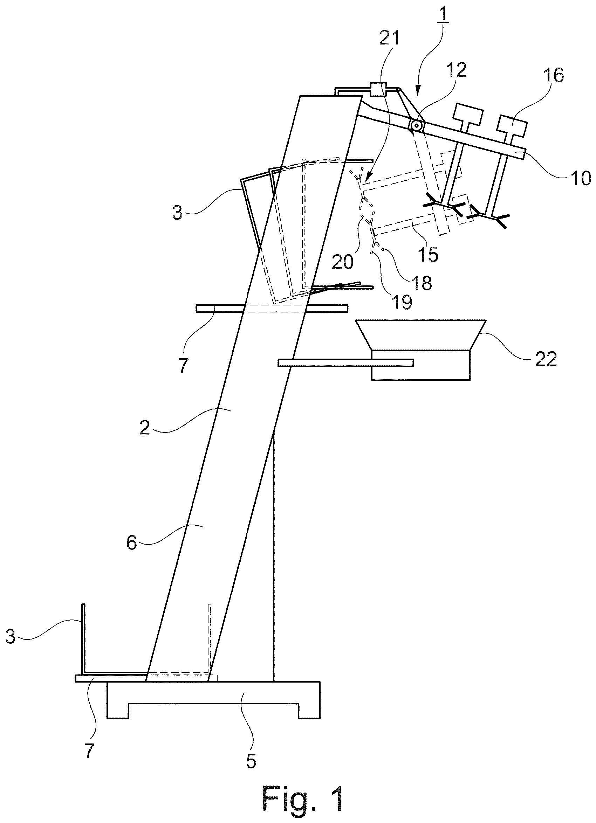

Die Figuren 1 bis 3 zeigen eine bevorzugte Ausführungsform einer Austragsvorrichtung 1, die an einem Hebekipper 2 montiert ist. Im Folgenden wird die Verarbeitung eines hochviskosen Nahrungsmittelteigs beschrieben. Die Austragsvorrichtung ist aber auch zur Verarbeitung von hochviskosen Riegel-, Stangen- oder Tafelmassen geeignet, die analog zur Teigverarbeitung erfolgt.

In der Figur 1 ist ein Hebekipper 2 einer Teigverarbeitungsanlage dargestellt. Dem Hebekipper 2 ist im Produktionsfluss eine nicht dargestellte Teigmisch-und Knetmaschine vorgeschaltet. Diese Teigmisch-und Knetmaschine umfasst einen Bottich, in dem der Teig durch ein motorisch angetriebenes Misch- und Knetwerkzeug geformt wird. Nach Beendigung des Knetvorganges wird der Bottich zu dem Hebekipper gefahren. Figur 1 stellt den Hebekippvorgang des Hebekippers dar. Als erstes wird ein Bottich 3 in dem Hebekipper 2 angehoben und dann gekippt. Solche Hebekipper 2 sind aus dem Stand der Technik in einer Vielzahl bekannt.

Der Grundkörper des Hebekippers 2 weist eine Bodenplatte 5 und zwei parallele Säulen 6 auf, an deren Innenseiten sich Führungsbahnen oder Führungsschienen für einen Hubwagen 7 befinden. Der Hubwagen 7 läuft über Rollen in Führungsbahnen der Schienen entlang einer Verfahrrichtung. Zur Lastaufnahme ist auf dem Hubwagen 7 eine nicht dargestellte Hebebühne angeordnet, die an dem Hubwagen 7 mittels eines Drehlagers schwenkbar gelagert ist. Auf der Hebebühne ist der Bottich 3 platziert, der somit über das Drehlager verkippbar ist. Die Kippachse ist senkrecht zur Verfahrrichtung des Hubwagens angeordnet. Die Verkippung kann bis zu 120°, insbesondere 135° betragen. Der Bottich 3 ist drehbar auf der Hebebühne befestigt. Ein Elektromotor treibt über ein Getriebe, insbesondere ein Wälzkörpergetriebe, das als Reibradgetriebe oder Zahnradgetriebe ausgeformt sein kann, den Bottich 3 an, der sich um eine Rotationsachse, die mit der Längsachse des Bottichs übereinstimmt, dreht.

Im oberen Teil des Hebekippers 2 ist zwischen den beiden Säulen 6 eine Drehachse 8 angeordnet, auf der zwei nicht dargestellte Kettenumlenkräder angeordnet sind, auf denen Rollenketten laufen. Im unteren oder oberen Teil des Hebekippers ist ein nicht dargestellter Antriebsmotor angeordnet, der die zwei parallellaufenden Rollenketten, an der der Hubwagen 7 befestigt ist, antreibt.

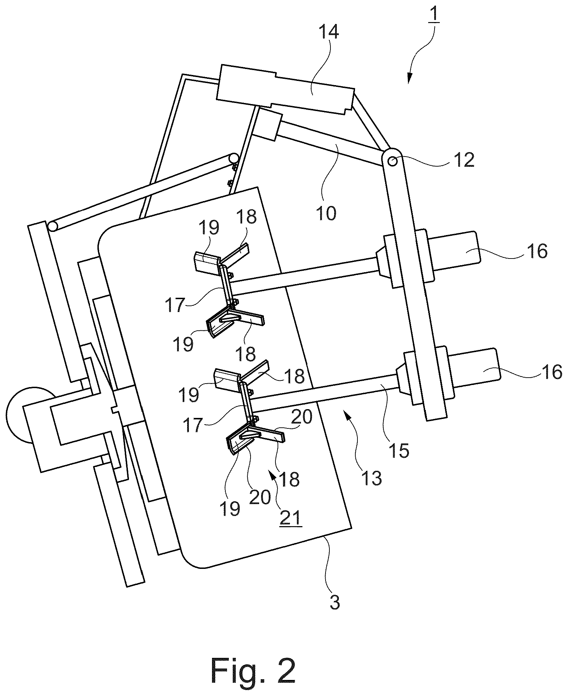

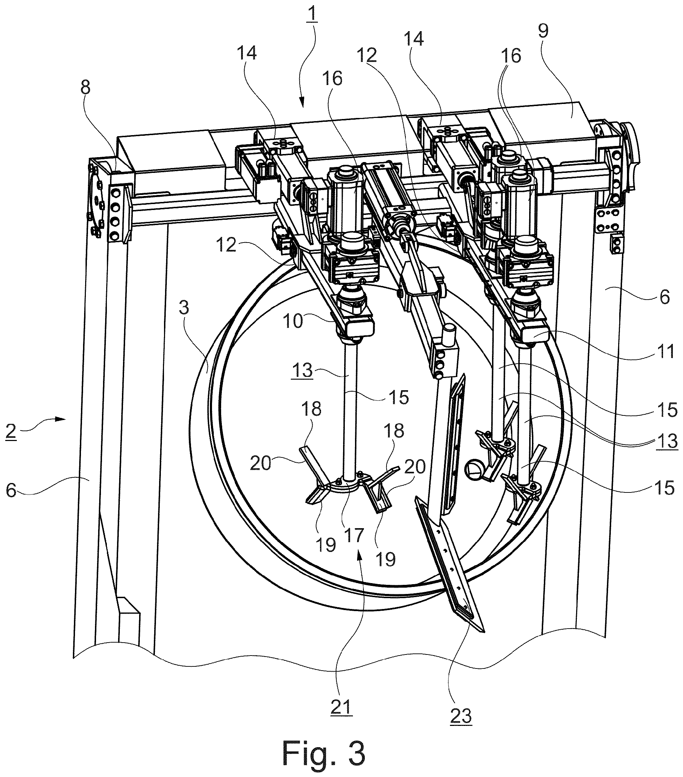

Die Drehachse 8 auf der die Kettenumlenkräder angeordnet sind ist von einem Querbalken 9 überdeckt, der die beiden Säulen 6 miteinander verbindet. An dem Querbalken 9 befinden sich die Austragsvorrichtung 1, aufweisend zwei rohrförmige Haltevorrichtungen 10,11, die jeweils ein Drehgelenk 12 aufweisen und an denen antreibbare Schneidwerkzeuge 13 gehalten sind. Die zwei Haltevorrichtungen der Austragsvorrichtung 10,11 sind jeweils um das Drehgelenk 12 mittels eines Linearantriebs 14 verschwenkbar. Das Schneidwerkzeug 13 ist dabei an dem verschenkbaren Teil der Haltevorrichtung 10,11 angeordnet. Die Linearantriebe 14 erlauben ein Einschwenken der Schneidwerkzeuge 13 in den Bottich 3 während des Kippvorgangs. Die an den Haltevorrichtungen 10,11 angeordneten Schneidwerkzeuge 13 weisen jeweils eine Welle 15 auf, die jeweils von einem zugeordneten Elektromotor 16 über ein Untersetzungsgetriebe angetrieben werden kann. Die Elektromotoren 16 sitzen dabei auf der entsprechenden Haltevorrichtung 10,11. Die Wellen 15 erstrecken sich bevorzugt senkrecht zur Längsachse der Haltevorrichtung 10,11. An den motorfernen Enden der Wellen ist jeweils eine Grundplatte 17 angeordnet, auf der die Welle 15 orthogonal steht. Von der Grundplatte 17 stehen flügelartig vier Messer 18,19 hervor, die in etwa rechteckig sind und deren Längsseiten Schneidkanten 20 ausbilden. Die Messer 18,19 stehen dabei nach außen von der Welle 15 ab. Zwei der vier Messer 19 sind von der Grundplatte 17 ausgehend nach unten, von der Welle 15 weg abgewinkelt. Die zwei weiteren Messer 18 sind von der Grundplatte 17 ausgehend nach oben, zur Welle 15 hin abgewinkelt. Zwei entgegengesetzt abgewinkelte Messer 18,19 bilden dabei ein in etwa v-förmiges Messerpaar. In Umfangsrichtung um die Welle 15 sind die Messerpaare gegenüberliegend ausgebildet. Die Messer 18,19 erstrecken sich mit ihren Längsseiten bevorzugt parallel zueinander. Die Grundplatte 17 und die Messer 18,19 bilden einen Messerkopf 21 des Schneidwerkzeugs 13 aus. Der Messerkopf 21 ist bevorzugt aus Edelstahl gebildet. Die Ausgestaltung der Austragsvorrichtung 1 und der Schneidwerkzeuge 13 ist im Detail in den Figuren 2 und 3 dargestellt.

Die beiden Haltevorrichtungen 10,11 erstrecken sich parallel zueinander und senkrecht zu dem Querbalken 9. Auf einer der Haltevorrichtungen 10 ist ein einziges Schneidwerkzeug 13 angeordnet und auf der anderen Haltevorrichtung 11 sind, in Richtung der Längsachse der Haltevorrichtung hintereinanderliegend, zwei Schneidwerkzeuge 13 angeordnet. Die Länge der Wellen 15 der Schneidwerkzeuge 13 ist so dimensioniert, dass die Messerköpfe 21 in den Bottich 3 bis in unmittelbare Nähe des Bodens eintauchen können. Während des Betriebs sollten die Messerköpfe 21 aber weder den Boden, noch die Wandung des Bottichs 3 berühren. Der Abstand der drei Wellen 15 in einer Ebene senkrecht zu den Längsachsen der Wellen 15 und die Größe der Messerköpfe 21 ist so dimensioniert, dass die Messerköpfe 21 sich im Betrieb nicht berühren und möglichst auf die gesamte Oberfläche der sich im Bottich 3 befindenden Teigmasse einwirken. Je größer der Durchmesser einer Einhüllenden der Messerköpfe 21 ist, desto besser ist das Ergebnis der Teigbearbeitung.

Während des Kippvorgangs des Hebekippers 2 wird die Austragsvorrichtung 1 derart gesteuert, dass die Schneidwerkzeuge 13 auf den im Bottich 3 befindlichen Teig zugestellt werden (siehe Figur 1). Durch eine relative Bewegung des Teiges zu den Messerköpfen 21, wird der Teig an diesen vorbeigeführt und mittels der Schnittkanten abgeschnitten, abgeschält und/oder abgetrennt. Der Teigblock wird dadurch stetig verkleinert. Die abgetrennte Teigmasse verbleibt zuerst in dem Bottich 3 und fällt, sobald der Kippwinkel groß genug ist auf ein unterhalb des Bottichs angeordnetes Förderband oder in einen Auffangbehälter 22. Die Messerköpfe 21 fungieren dabei auch als eine Art Rückhaltevorrichtung. Erst wenn die Teigmasse klein genug ist, kann sie den Raum zwischen den Schneidwerkzeugen 13 passieren und bei entsprechender Kippung aus dem Bottich 3 fallen. Der Schneidvorgang wiederholt sich kontinuierlich, so dass der Teigblock immer kleiner wird und somit in kleinen Mengen aus dem Bottich ausgetragen werden kann. In anschließenden Bearbeitungsvorrichtungen können diese kleinen Teigmengen über einen Teigtrichter beschickt werden. Die Austragsvorrichtung 1 verhindert mittels der Schneidwerkzeuge 13, dass zu große Klumpen ausgetragen werden, die die Bearbeitungsvorrichtung verstopfen würden. Es ist ein kontinuierlicher Eintrag der in dem Bottich 3 befindlichen Charge in den Trichter der Bearbeitungsvorrichtung möglich. Durch die Anordnung der Austragsvorrichtung 1 an dem Hebkipper 2 wird eine kompakte Lösung geschaffen, die auf bestehende Komponenten zurückgreift.

Es kann vorgesehen sein, dass die Relativbewegung durch Drehung des Bottichs 3 und/oder der Schneidwerkzeuge 13 erfolgt. Die Schneidwerkzeuge 13 können sich untereinander in entgegengesetzte oder in dieselbe Richtung drehen. Der Bottich 3 kann sich ebenfalls in beide Richtungen drehen und während des Austragsvorgangs die Drehrichtung ändern. Die Geschwindigkeit der Drehungen des Bottichs 3 und der Schneidwerkzeuge 13 kann über den gesamten Austragsvorgang konstant sein, sich aber auch ändern. Es kann eine Steuerung und/oder Regelung mittels einer an den Elektromotoren des Bottichs 3 und/oder der Schneidwerkzeuge 13 anliegenden Last vorgenommen werden. Dazu sind bevorzugt Frequenzumrichter vorgesehen. Die Anzahl der Schneidwerkzeuge 13 ist bevorzugt größer als zwei. Die Anordnung der Schneidwerkzeuge 13 auf der Haltevorrichtung 10,11 kann dabei an die Anzahl der Schneidwerkzeuge 13 und die Dimensionierung der Messerköpfe 21 angepasst werden.

Die Messerköpfe 21 sind in der zuvor beschriebenen Ausführungsform identisch ausgestaltet. Es kann aber auch vorgesehen sein, dass die Messerköpfe 21 unterschiedliche Größen haben. Es kann auch vorgesehen sein, dass an der Welle auf unterschiedlichen Höhen weitere Messer angeordnet sind und/oder das von der Grundplatte mehrere Messer abgehen, die beispielsweise auch zusätzlich nach oben, zur Welle hin, gekantet sein können.

In einer Ausführungsform kann auch vorgesehen sein, dass die Schneidwerkzeuge starr an der Haltevorrichtung befestigt sind, so dass sie sich nicht drehen können und die Elektromotoren und dadurch zusätzliche Kosten eingespart werden können.

Das Einfahren, insbesondere Einschwenken, der Schneidwerkzeuge in den Bottich erfolgt bevorzugt über eine Positionsregelung, insbesondere eine lastgesteuerte Positionsregelung mit Frequenzumrichter. Dadurch kann das Eintauchen der Messerköpfe in den Bottich so optimiert werden, dass diese lediglich auf die Oberfläche des Teiges einwirken und nicht soweit in den Teig eindringen, dass ein Blockieren der Messerköpfe oder ein Verklumpen der Messerköpfe verhindert werden kann. Zudem kann so sichergestellt, dass die abgetrennten Teigmassen eine gewisse Größe nicht überschreiten.

Es kann zudem allgemein vorgesehen sein, dass die in kleinen Stücken ausgetragene Teigmasse aus dem Bottich auf einen Trennstrich fällt. Dieser Trennstrich zerteilt die Teigmasse bei Bedarf weiter und dient der Größenkontrolle des ausgetragenen Teigstücks. Der Trennstrich kann dabei zwischen Bottich und Fließband oder Auffangbehälter angeordnet sein. Die Fallhöhe zwischen Bottich und Fließband oder Auffangbehälter ist dabei bevorzugt mindestens 0,5 m, insbesondere mindestens 0,8 m. Durch die große Fallhöhe und die damit einhergehende potentielle Energie des Teigs kann eine weitere Zerkleinerung der ausgetragenen Teigmasse bei Aufprall auf das Fließband oder den Auffangbehälter erzielt werden.

Es kann bei der Beschickung der Bearbeitungsvorrichtung von dem Fließband aus ebenfalls eine entsprechend große Fallhöhe vorgesehen sein. Die Teigmasse fällt von dem Fließband auf den Trichter und wird durch die potentielle Energie weiter zerkleinert.

Am Ende des Kippvorgangs ist der Teig Stück für Stück ausgetragen worden. Die Austragsvorrichtung wird aus dem Bottich herausgeschwenkt. Der Bottich wird mit an sich bekannten Ausschälvorrichtungen 23, die fest angeordnet an dem Querbalken des Hebekippers installiert sind, falls notwendig restentleert und gesäubert.

Je nach Teigrezept ist ein spezielles Programm für den Kippvorgang vorgesehen. Das Programm steuert die Kippgeschwindigkeit und die Drehung des Bottichs und/oder der Schneidwerkzeuge, sowie das Eintauchen der Schneidwerkzeuge in den Bottich. Es kann auch vorgesehen sein, dass Abweichungen der Teigparameter erfasst werden können und eine Regelung das Programm an die Gegebenheiten anpasst.

Die Erfindung ist nicht auf einen Hebekipper mit zwei Säulen beschränkt. Die Austragsvorrichtung kann auch an einem Einsäulen-Hebekipper befestigt werden.

Ganz allgemein kann die Austragsvorrichtung eine zusätzliche Rückhaltevorrichtung aufweisen, die verhindert, dass zu große Teigstücke bzw. Massen aus dem Bottich fallen. Eine solche Rückhaltevorrichtung hätte den Vorteil, dass die Größe der ausgetragenen Masse zuverlässig definiert werden könnte. Diese Rückhaltevorrichtung kann beispielsweise eine Platte oder ein Gitter sein, die die Öffnung des Bottichs abdecken. Die Platte oder das Gitter weisen dabei definierte Öffnungen auf, die nur für eine bestimmte Teiggröße durchlässig sind, so dass zu große Stücke nicht aus dem Bottich fallen können. Die Rückhaltevorrichtung ist vorzugsweise ebenfalls an der Haltevorrichtung befestigt.

Um die Zuverlässigkeit der Austragsvorrichtung zu erhöhen, kann auch eine Videoüberwachung vorgesehen sein, bei der anhand von Bildanalyse die Größen der Teigmassen beobachtet werden und falls notwendig Einfluss auf die Regelung der Austragsvorrichtung genommen wird, um das Austragen von zu großen Stücken aus dem Bottich zu vermeiden.

## Patentansprüche

1. Hebekipper (2) mit einer Austragsvorrichtung (1) zum Austrag einer kompakten Nahrungsmittelmasse aus einem in dem Hebekipper (2) angeordneten Knetbottich (3), **dadurch gekennzeichnet, dass** die Austragsvorrichtung (1) wenigstens zwei Schneidwerkzeuge (13) aufweist, die jeweils wenigstens zwei Schneidkanten (20) aufweisen.

2. Hebekipper nach Anspruch 1, **dadurch gekennzeichnet, dass** die Schneidwerkzeuge (13) dazu eingerichtet sind, eine kompakte Nahrungsmittelmasse zu durchtrennen oder zu zerschneiden.

3. Hebekipper nach Anspruch 1 oder 2, **dadurch gekennzeichnet, dass** die wenigstens zwei Schneidwerkzeuge (13) jeweils wenigstens einen Messerkopf (21) haben, wobei der Messerkopf (21) die Schneidkanten (20) aufweist.

4. Hebekipper nach Anspruch 3, **dadurch gekennzeichnet, dass** die Schneidwerkzeuge (13) jeweils eine Stange (15) aufweisen, an deren Ende der wenigstens eine Messerkopf (21) angeordnet ist.

5. Hebekipper nach Anspruch 4, **dadurch gekennzeichnet, dass** die Stange (21) eine Welle ist, die mittels eines Elektromotors (16) antreibbar ist.

6. Hebekipper nach Anspruch 4 oder 5, **dadurch gekennzeichnet, dass** die Messerköpfe (21) jeweils eine Grundplatte (17) aufweisen, auf der die Stange (15) orthogonal steht und von der flügelartig wenigstens zwei Messer (18,19) hervorragen, deren Seiten zumindest teilweise als Schneidkante (20) ausgebildet sind.

7. Hebekipper nach einem der vorhergehenden Ansprüche, **dadurch gekennzeichnet, dass** der Hebekipper (2) im oberen Teil einen Querbalken (9) aufweist, an dem wenigstens eine Haltevorrichtung (10,11) der Austragsvorrichtung (1) angeordnet ist, die die wenigstens zwei Schneidwerkzeuge (13) trägt.

8. Hebekipper nach Anspruch 7, **dadurch gekennzeichnet, dass** die wenigstens eine Haltevorrichtung (10,11) senkrecht von dem Querbalken (9) abgeht und dass die wenigstens eine Haltevorrichtung (10,11) ein Drehgelenk (12) aufweist, so dass ein Ende der wenigstens einen Haltevorrichtung (10,11) mittels eines Elektromotors (14) verschwenkbar ist, wobei die wenigstens zwei Schneidwerkzeuge (13) an dem zu verschwenkenden Teil der wenigstens einen Haltevorrichtung (10,11) angeordnet sind.

9. Hebekipper nach Anspruch 7 oder 8, **dadurch gekennzeichnet, dass** die Haltevorrichtung (10,11) dazu eingerichtet ist, die Schneidwerkzeuge (13) in einen auf einer Hebebühne des Hebekippers (2) drehbar befestigten Knetbottich (3) einzuschwenken.

10. Hebekipper nach einem der vorhergehenden Ansprüche, **dadurch gekennzeichnet, dass** der Hebekipper (2) eine Ausschälvorrichtung (23) aufweist.

11. Verfahren zum Austragen einer kompakten Nahrungsmittelmasse aus einem in einem Hebekipper (2) angeordneten Knetbottich (3) mit folgenden Verfahrensschritten:
- Verkippen des Knetbottichs (3) um eine Kippachse,
- Einbringen wenigstens zweier Schneidwerkzeuge (13) einer an dem Hebekipper (2) angeordneten Austragsvorrichtung (1) in den Knetbottich (3),
- Bewegen der Schneidwerkzeuge (13) relativ zu einer im Knetbottich (3) befindlichen Nahrungsmittelmasse, derart, dass die Schneidwerkzeuge (13) die Nahrungsmittelmasse in kleinere Stücke schneiden,
- Vergrößerung des Kippwinkels des Knetbottichs (3), derart, dass die kleinen Stücke aus dem Knetbottich (3) fallen und die noch vorhandenen großen Stücke zurückgehalten werden,
- Nach Beendigung des Austragsvorgangs Herausbringen der Schneidwerkzeuge (13) aus dem Knetbottich (3).

12. Verfahren nach Anspruch 11, **dadurch gekennzeichnet, dass** die Schneidwerkzeuge (13) so ausgestaltet sind, dass sie während des Kippvorgangs die großen Stücke zurückhalten.

13. Verfahren nach einem der Ansprüche 11 oder 12, **dadurch gekennzeichnet, dass** die Kippbewegung und die Relativbewegung, sowie die Ausgestaltung und die Anzahl der Schneidwerkzeuge (13) an die Zusammensetzung der Nahrungsmittelmasse angepasst sind.

14. Verfahren nach einem der Ansprüche 11 bis 13, **dadurch gekennzeichnet, dass** das Einbringen der Schneidwerkzeuge (13) in den Knetbottich (3) lastgesteuert ist.

## Claims

1. Lifting tipper (2) with a discharge device (1) for the discharge of a compact food mass from a kneading vat (3) arranged in the lifting tipper (2), **characterized in that** the discharge device (1) has at least two cutting tools (13) which each have at least two cutting edges (20).

2. Lifting tipper according to claim 1, **characterized in that** the cutting tools (13) are adapted to cut or slice through a compact food mass.

3. Lifting tipper according to claim 1 or 2, **characterized in that** the at least two cutting tools (13) each have at least one cutter head (21), the cutter head (21) having the cutting edges (20).

4. Lifting tipper according to claim 3, **characterized in that** the cutting tools (13) each have a rod (15), at the end of which the at least one cutter head (21) is arranged.

5. Lifting tipper according to claim 4, **characterized in that** the rod (21) is a shaft which can be driven by means of an electric motor (16).

6. Lifting tipper according to claim 4 or 5, **characterized in that** the cutter heads (21) each have a base plate (17) on which the rod (15) stands orthogonally and from which at least two knives (18, 19) project in a wing-like manner, the sides of which knives are at least partially formed as cutting edges (20).

7. Lifting tipper according to one of the preceding claims, **characterized in that** the lifting tipper (2) has in the upper part a crossbeam (9) on which at least one holding device (10, 11) of the discharge device (1) is arranged, which holds the at least two cutting tools (13).

8. Lifting tipper according to claim 7, **characterized in that** the at least one holding device (10, 11) extends perpendicularly from the crossbeam (9) and that the at least one holding device (10, 11) has a swivel joint (12) so that one end of the at least one holding device (10, 11) can be swiveled by means of an electric motor (14), the at least two cutting tools (13) being arranged on the part of the at least one holding device (10, 11) to be swiveled.

9. Lifting tipper according to claim 7 or 8, **characterized in that** the at least one holding device (10, 11) is set up to pivot the cutting tools (13) into a kneading vat (3) rotatably mounted on a lifting platform of the lifting tipper (2).

10. Lifting tipper according to any one of claims 6 to 9, **characterized in that** the lifting tipper (2) has a stripping device (23).

11. Method for discharging a compact food mass from a kneading vat (3) arranged in a lifting tipper (2), comprising the following method steps:
- Tilting the kneading vat (3) about a tilting axis,
- Insertion of at least two cutting tools (13) of a discharge device (1) arranged on the lifting tipper (2) into the kneading vat (3),
- Moving the cutting tools (13) relative to a food mass located in the kneading vat (3) in such a way that the cutting tools (13) cut the food mass into smaller pieces,
- Increasing the tilting angle of the kneading vat (3) in such a way that the small pieces fall out of the kneading vat (3) and the large pieces still present are retained,
- After completion of the discharge process, remove the cutting tools (13) from the kneading vat (3).

12. Method according to claim 11, **characterized in that** the cutting tools (13) are designed to retain the large pieces during the tilting process.

13. Method according to one of claims 11 or 12, **characterized in that** the tilting movement and the relative movement, as well as the design and the number of cutting tools (13) are adapted to the composition of the food mass.

14. Method according to any one of claims 11 to 13, **characterized in that** the introduction of the cutting tools (13) into the kneading vat (3) is load-controlled.

## Revendications

1. Elévateur basculant (2) équipé d'un dispositif de décharge (1) affecté au déversement d'une masse alimentaire compacte à partir d'une cuve de pétrissage (3) intégrée dans ledit élévateur basculant (2), **caractérisé par le fait que** le dispositif de décharge (1) est muni d'au moins deux outils de sectionnement (13) dotés, à chaque fois, d'au moins deux arêtes tranchantes (20).

2. Elévateur basculant selon la revendication 1, **caractérisé par le fait que** les outils de sectionnement (13) sont conçus pour séparer ou pour découper une masse alimentaire compacte.

3. Elévateur basculant selon la revendication 1 ou 2, **caractérisé par le fait que** les outils de sectionnement (13), au nombre minimal de deux, sont respectivement pourvus d'au moins une tête de coupe (21), laquelle tête de coupe (21) présente les arêtes tranchantes (20).

4. Elévateur basculant selon la revendication 3, **caractérisé par le fait que** les outils de sectionnement (13) sont munis, à chaque fois, d'une tige (15) à l'extrémité de laquelle se trouve la tête de coupe (21) à présence minimale.

5. Elévateur basculant selon la revendication 4, **caractérisé par le fait que** la tige (21) est un arbre pouvant être entraîné au moyen d'un moteur électrique (16).

6. Elévateur basculant selon la revendication 4 ou 5, **caractérisé par le fait que** les têtes de coupe (21) comportent, à chaque fois, une platine d'embase (17) sur laquelle la tige (15) se dresse orthogonalement et au-delà de laquelle font saillie, à la manière d'ailettes, au moins deux lames (18, 19) dont les côtés sont au moins partiellement réalisés en tant qu'arête tranchante (20).

7. Elévateur basculant selon l'une des revendications précédentes, **caractérisé par le fait que** ledit élévateur basculant (2) est doté, en partie haute, d'une traverse (9) sur laquelle est implanté au moins un dispositif de retenue (10, 11) du dispositif de décharge (1), qui porte les outils de sectionnement (13) au nombre minimal de deux.

8. Elévateur basculant selon la revendication 7, **caractérisé par le fait que** le dispositif de retenue (10, 11), à présence minimale, s'étend perpendiculairement à partir de la traverse (9) ; et **par le fait que** ledit dispositif de retenue (10, 11) à présence minimale comporte une articulation tournante (12), de façon telle qu'une extrémité dudit dispositif de retenue (10, 11) à présence minimale puisse être animée de pivotements au moyen d'un moteur électrique (14), sachant que les outils de sectionnement (13), au nombre minimal de deux, sont installés sur la partie dudit dispositif de retenue (10, 11) à présence minimale qui est vouée au pivotement.

9. Elévateur basculant selon la revendication 7 ou 8, **caractérisé par le fait que** le dispositif de retenue (10, 11) est conçu pour introduire les outils de sectionnement (13), par pivotement, dans une cuve de pétrissage (3) fixée, avec aptitude rotatoire, sur une plate-forme élévatrice dudit élévateur basculant (2).

10. Elévateur basculant selon l'une des revendications précédentes, **caractérisé par le fait que** ledit élévateur basculant (2) est équipé d'un dispositif de raclement (23).

11. Procédé de déversement d'une masse alimentaire compacte à partir d'une cuve de pétrissage (3) intégrée dans un élévateur basculant (2), incluant les étapes opératoires suivantes :
- basculement imprimé à la cuve de pétrissage (3) autour d'une axe de basculement,
- introduction, dans ladite cuve de pétrissage (3), d'au moins deux outils de sectionnement (13) d'un dispositif de décharge (1) implanté sur ledit élévateur basculant (2),
- mise en mouvement desdits outils de sectionnement (13), par rapport à une masse alimentaire située dans ladite cuve de pétrissage (3), de telle manière que lesdits outils de sectionnement (13) découpent ladite masse alimentaire en des morceaux de petite taille,
- accroissement de l'angle de basculement de la cuve de pétrissage (3), de façon telle que les petits morceaux chutent hors de ladite cuve de pétrissage (3), et que les gros morceaux encore présents soient retenus,
- extraction desdits outils de sectionnement (13) hors de ladite cuve de pétrissage (3) après l'achèvement du processus de décharge.

12. Procédé selon la revendication 11, **caractérisé par le fait que** les outils de sectionnement (13) sont configurés de telle sorte qu'ils retiennent les gros morceaux au cours du processus de basculement.

13. Procédé selon l'une des revendications 11 ou 12, **caractérisé par le fait que** le mouvement basculant et le mouvement relatif, ainsi que la configuration et le nombre des outils de sectionnement (13), sont adaptés à la composition de la masse alimentaire.

14. Procédé selon l'une des revendications 11 à 13, **caractérisé par le fait que** l'introduction des outils de sectionnement (13), dans la cuve de pétrissage (3), est pilotée en adéquation avec la charge.
